# EUROPEAN PATENT SPECIFICATION

(11) **EP 0 603 897 B1**
(45) Date of publication and mention of the grant of the patent: **23.02.2000**
(21) Application number: 93120823.5
(22) Date of filing: 23.12.1993
(51) Int. Cl.: G11B 27/30, G11B 15/467

(54) **A video tape recorder**
Videobandrekorder
Magnétoscope

(30) Priority: 25.12.1992 JP 34601392
(43) Date of publication of application: 29.06.1994
(73) Proprietor: SANYO ELECTRIC Co., Ltd., Moriguchi-shi, Osaka 570 (JP)
(72) Inventor: Tabuchi, Junichiro, Tondabayashi-shi, Osaka (JP)
(74) Representative: Glawe, Delfs, Moll & Partner

(56) References cited:
- EP-A- 0 209 151
- FR-A- 2 384 320
- GB-A- 2 269 044
- US-A- 4 999 722
- US-A- 5 115 324
- PATENT ABSTRACTS OF JAPAN vol. 17, no. 335 (P-1563) 24 June 1993 & JP-A 05 040 981 (SANYO ELECTRIC CO., LTD.) 19 February 1993
- PATENT ABSTRACTS OF JAPAN vol. 9 no. 24 (P-331) [1747] ,31 January 1985 & JP-A-59 168959 (SONY K.K.) 22 September 1984

## Description

### BACKGROUND OF THE INVENTION

### Field of the invention

The present invention generally relates to a video tape recorder. More specifically, the present invention relates to a video tape recorder such as an 8mm VTR having a tracking function of a 4-frequency pilot system.

### Description of the prior art

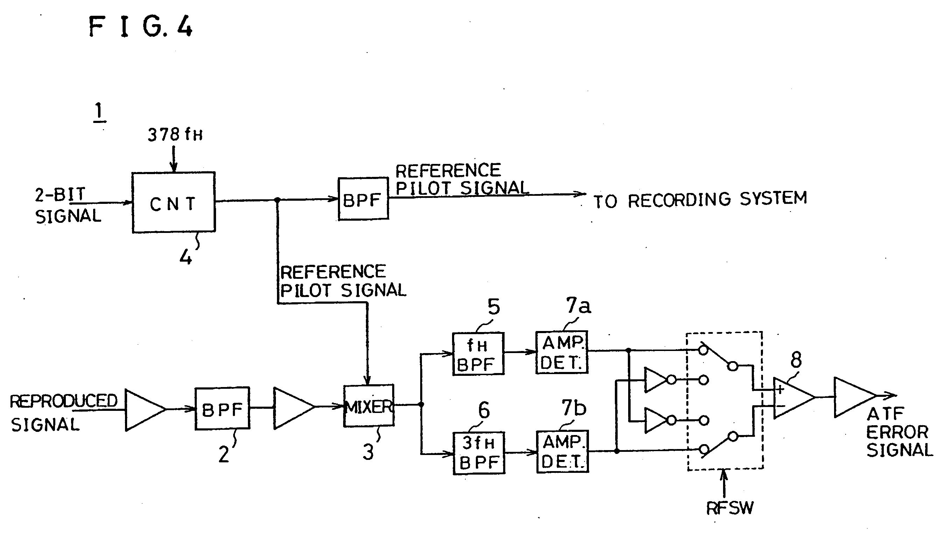

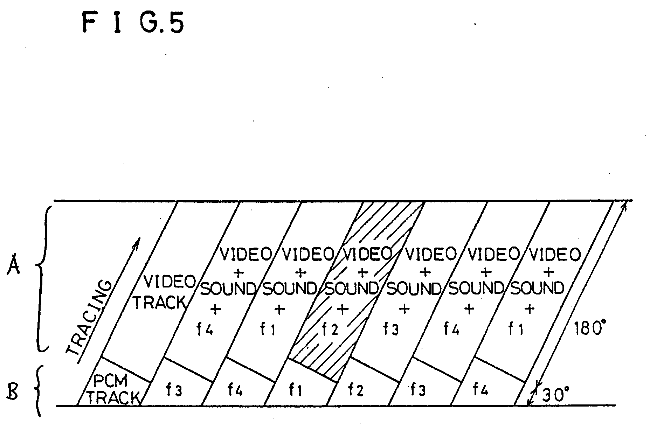

With referring to Figure 4, in a conventional video tape recorder 1 of a 4-frequency pilot system, when a portion indicated by slanting lines in Figure 5 is traced by a magnetic head in a reproducing mode, pilot signals f₁, f₂ and f₃ are derived by a bandpass filter 2, and then, inputted to a mixer 3. On the other hand, a reference pilot signal f₂ is reproduced by a programmable counter 4, and then, inputted to the mixer 3. Therefore, a difference signal (f₂ - f₁) and a difference signal (f₃ - f₂) are outputted from the mixer 3, and then, wave-shaped by an f_{H} bandpass filter 5 and a 3f_{H} bandpass filter 6, respectively. Thereafter, levels of the difference signals (f₂ - f₁) and (f₃ - f₂) are detected by amplitude detectors 7a and 7b, and a level difference between the both levels is evaluated by an operational amplifier 8. Accordingly, an ATF error signal is outputted from the operational amplifier 8 so that a rotation speed and a phase of a Capstan motor (not shown) are controlled, whereby a tracking can be automatically adjusted.

A prior art very similar to Figure 4 prior art is disclosed in, for example, Japanese Patent Publication No. 59-31795 published for opposition on August 4, 1984 (FR-A-7807298).

In the above described conventional video tape recorder, no PCM signal is recorded, and therefore, PCM areas or tracks becomes to be full-empty areas. On the other hand, in such video tape recorders, there is no control signal such as a signal which is utilized in a VHS system, and therefore, there was a problem that in order to write or record an index, it was required to provided a large-scaled circuitry similar to a circuitry used in a VSC (video subcode) system.

US-A-5 115 324 shows a recording apparatus for recording an information signal on a recording medium which has a timer for automatically renewing the date and a circuitry for providing a mark on the recording medium when recording starts after the date is changed by the timer. Means for generating a mark switches pilot signal generation means in response to a control signal, so that the size of the region in which the pilot signal is recorded in each track is different from the size for another period in response to that control signal.

Therefore it is a principle object of the present invention to provide a video tape recorder capable of writing or recording an index easily.

This object is solved by the features of claim 1.

Further advantageous features are mentioned in the subclaims.

First, second, third and fourth reference pilot signals are recorded in respective first areas of the first, second, third and fourth tracks. On the other hand, any one of the first and third reference pilot signals is recorded in respective second areas of the first and third tracks by the first recording means, and any one of the second and fourth reference pilot signals is recorded in respective second areas of the second and fourth tracks by the second recording means.

When the first track is traced by a first magnetic head included in the first recording means, the fourth reference pilot signal and a signal obtained when the first magnetic head traces the second area of the first track (which signal includes a signal corresponding to one of the first and third reference pilot signals and a signal reproduced from the second area of the fourth and second tracks which are adjacent to the first track) are mixed by a mixer, for example, so that two frequency difference signals are obtained. The two frequency difference signals are applied to a 46 kHz bandpass filter and a 16 kHz bandpass filter, for example. A level outputted from one of the bandpass filters is subtracted by a level of the other of the bandpass filters by an operational amplifier, for example.

When the second track is traced by a second magnetic head included in the second recording means, the first reference pilot signal and a signal obtained when the second magnetic head traces the second area of the second track (which signal includes a signal corresponding to one of the second and fourth reference pilot signals and a signal reproduced from the second area of the first and third tracks by which the second track is sandwiched) are mixed by a mixer, for example, so that two frequency difference signals are obtained. The two frequency difference signals are applied to a 46 kHz bandpass filter and a 16 kHz bandpass filter, for example. A level outputted from one of the bandpass filters is subtracted by a level of the other of the bandpass filters by an operational amplifier, for example.

When the third track is traced by the first magnetic head included in the first recording means, the second reference pilot signal and a signal obtained when the first magnetic head traces the second area of the third track (which signal includes a signal corresponding to one of the first and third reference pilot signals and a signal reproduced from the second area of the fourth and second tracks which are adjacent to the first track) are mixed by a mixer, for example, so that two frequency difference signals are obtained. The two frequency difference signals are applied to a 46 kHz bandpass filter and a 16 kHz bandpass filter, for example. A level outputted from one of the bandpass filters is subtracted by a level of the other of the bandpass filters by an operational amplifier, for example.

When the fourth track is traced by the second magnetic head included in the second recording means, the third reference pilot signal and a signal obtained when the second magnetic head traces the second area of the second track (which signal includes a signal corresponding to one of the second and fourth reference pilot signals and a signal reproduced from the second area of the third and first tracks by which the fourth track are sandwiched) are mixed by a mixer, for example, so that two frequency difference signals are obtained. The two frequency difference signals are applied to a 46 kHz bandpass filter and a 16 kHz bandpass filter, for example. A level outputted from one of the bandpass filters is subtracted by a level of the other of the bandpass filters by an operational amplifier, for example.

Thus, signals from respective operational amplifiers are utilized as a signal for determining whether or not there is an index.

In accordance with the present invention, only by recording a predetermined reference pilot signal in the second area of each track as necessary, it is possible to add an index without a large-scaled and complex circuitry.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Figure 1 is a block diagram showing an embodiment according to the present invention;
Figure 2 is an illustrative view showing one example of a recording format of a magnetic tape;
Figure 3 is a timing chart showing an operation of Figure 1 embodiment, where Figure 3(A) shows a heat switching signal Figure 3(B) and Figure 3(C) show pilot signals, and Figure 3(D) shows an index signal;
Figure 4 is a block diagram showing a prior art; and
Figure 5 is an illustrative view showing a recording format of a magnetic tape in the prior art.

### DETAILED DESCRIPTION OF THE PREFERRED EMBODIMENTS

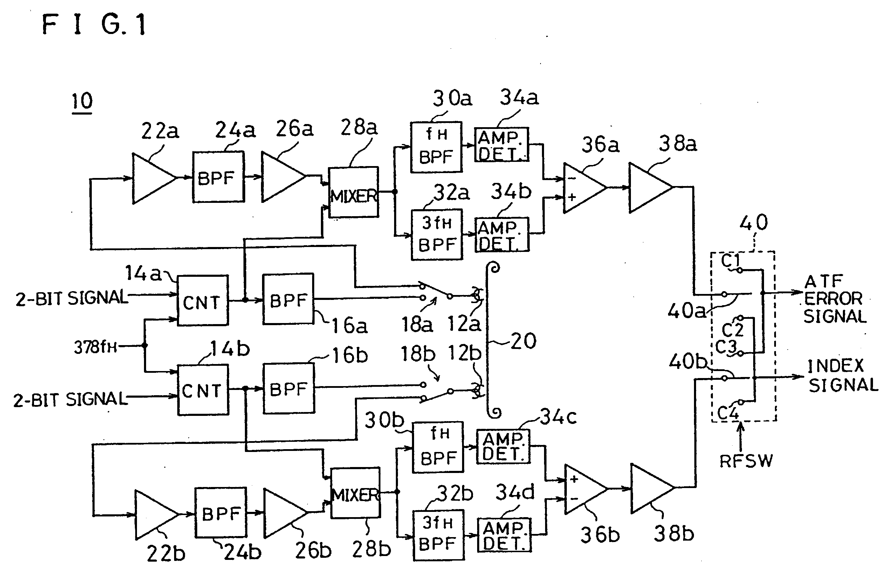

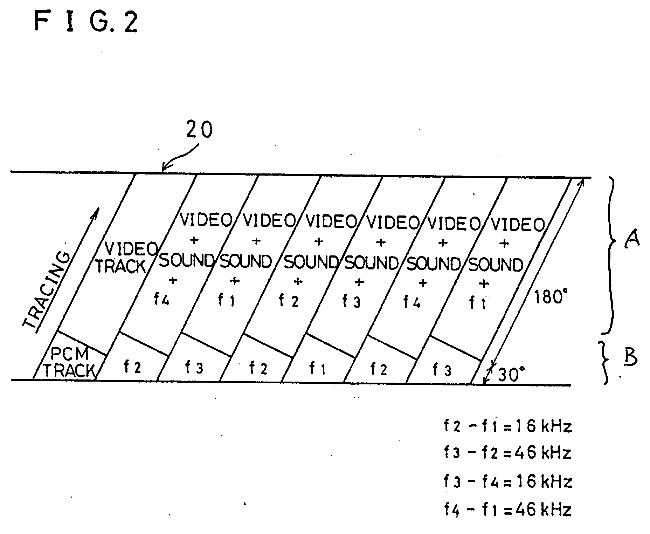

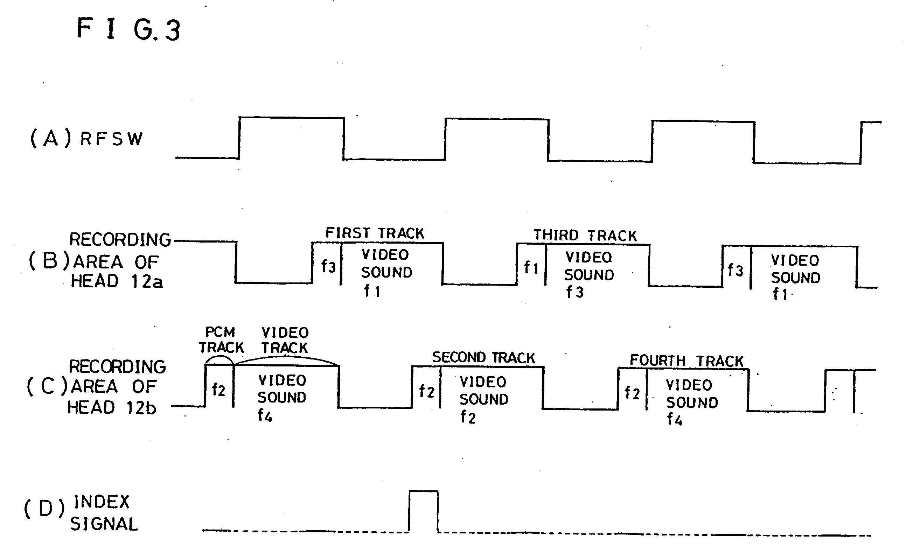

With referring to Figure 1, a video tape recorder 10 of this embodiment shown includes first and second magnetic heads 12a and 12b. In a recording mode, reference pilot signals f₁ and/or f₃ produced by a programmable counter 14a is applied to the first magnetic head 12a via a bandpass filter 16a and a switch 18a at every timing of 180 degrees rotation of the first magnetic head 12a. On the other hand, at every timing of 180 degrees rotation of the second magnetic head 12b, reference pilot signals f₂ and/or f₄ produced by a programmable counter 14b are applied to the second magnetic head via a bandpass filter 16b and a switch 18b. In addition, although not shown in Figure 1, a video signal and a sound signal are also applied to the first and second magnetic heads 12a and 12b through other signal systems. Therefore, on respective tracks of a magnetic tape 20, as shown in Figure 2, 3(B) and Figure 3(c), the video signal and the sound signal are sequentially recorded on video tracks, and reference pilot signals f₁, f₂, f₃ and f₄ for performing a tracking of a 4-frequency pilot system are periodically or cyclically recorded in accordance with an order of the respective video tracks.

Furthermore, reference pilot signals described below are recorded in second areas of respective tracks, that is, PCM tracks in this embodiment shown. More specifically, any one of the reference pilot signals f₁ and f₃ produced by the programmable counter 14a is recorded on the first and third tracks. In this embodiment shown, the reference pilot signal f₃ is recorded on the first track, and the reference pilot signal f₁ is recorded on the third track. On the other hand, any one of the reference pilot signals f₂ and f₄ produced by the programmable counter 14b is recorded on the second and fourth tracks. In this embodiment shown, the reference pilot signal f₂ is recorded on the second track, and the reference pilot signal f₂ is recorded on the fourth track.

In the present invention, by writing or recording the reference pilot signals for performing a tracking of a 4-frequency pilot system in the second areas of the respective tracks as necessary, it becomes possible to add an index in arbitrary tracks without any specific circuitry.

In addition, in an NTSC system, for example, the programmable counter 14a and 14b can produce the respective reference pilot signals f₁, f₂, f₃ and f₄ having frequency relationship shown in Figure 2 on the basis of a clock 378f_{H} and in response to 2-bit signals "00", "01", "10" or "11" provided by a microcomputer (not shown). In a PAL system, however, instead of the clock 378f_{H}, a clock 375f_{H} is utilized. Furthermore, the switches 18a and 18b are switched in accordance with a recording mode/reproducing mode changing signal outputted from the microcomputer (not shown) in response to instructions from a remote controller (not shown).

In a reproducing mode, when the first track, for example, shown in Figure 2 is traced by the first magnetic head 12a, not only the reference pilot signal f₃ is reproduced from the second area, that is, the PCM track of the first track, but also the reference pilot signal f₂ is reproduced from respective second areas of the fourth and second tracks by which the first track is sandwiched. Furthermore, not only the video signal, the sound signal and the reference pilot signal f₁ are reproduced from the first area, that is, the video track of the first track, but also the reference pilot signals f₄ and f₂ are reproduced from the respective first areas of the fourth and second tracks by which the first track is sandwiched together with the video signal and the sound signal of that tracks. In a similar manner, when the third track, for example, shown in Figure 2 is traced by the first magnetic head 12a, the reference pilot signals f₁, f₂ and f₃ are reproduced from the PCM tracks, and the reference pilot signals f₃ and f₄ are reproduced from the video tracks together with respective video signals and sound signals.

When the second track, for example, shown in Figure 2 is traced by the second magnetic head 12b, not only the reference pilot signal f₂ is reproduced from the second area, that is, the PCM track of the first track, but also the reference pilot signals f₃ and f₁ are reproduced from respective second areas of the first and third tracks by which the second track is sandwiched. Furthermore, not only the video signal, the sound signal and the reference pilot signal f₂ are reproduced from the first area, that is, the video track of the first track, but also the reference pilot signals f₁ and f₃ are reproduced from the respective first areas of the first and third tracks by which the second track is sandwiched together with the video signal and the sound signal of that tracks. In a similar manner, when the fourth track, for example, shown in Figure 2 is traced by the second magnetic head 12b, the reference pilot signals f₂, f₃ and f₁ are reproduced from the PCM tracks, and the reference pilot signals f₄, f₃ and f₁ are reproduced from the video tracks together with respective video signals and sound signals.

Respective reproduced signals are inputted to bandpass filters 24a and 24b via a preamplifiers 22a and 22b. Therefore, when the first track is traced by the first magnetic head 12a, reproduced reference pilot signals f₃ and f₂ from the PCM track and reproduced reference pilot signals f₄, f₁ and f₂ from the video track are outputted from the bandpass filter 24a. Furthermore, the second track is traced by the second magnetic head 12b, reproduced reference pilot signals f₂, f₃ and f₁ from the PCM track and reproduced reference pilot signals f₁, f₂ and f₃ are outputted from the bandpass filter 24b. Respective signals outputted from the bandpass filters 24a and 24b are inputted to mixers 28a and 28b via amplifiers 26a and 26b, respectively.

Furthermore, when the third track is traced by the first magnetic head 12a, reproduced reference pilot signals f₁ and f₂ from the PCM track and reproduced reference pilot signals f₃, f₂ and f₄ from the video track are outputted from the bandpass filter 24a. Furthermore, the fourth track is traced by the second magnetic head 12b, reproduced reference pilot signals f₂, f₁ and f₃ from the PCM track and reproduced reference pilot signals f₄, f₃ and f₁ are outputted from the bandpass filter 24b. Respective signals outputted from the bandpass filters 24a and 24b are inputted to mixers 28a and 28b via amplifiers 26a and 26b, respectively.

The reference pilot signal produced by the programmable counter 14a is further inputted to the mixer 28a. More specifically, when the PCM track of the first track is traced, that is, during a period that the reproduced reference pilot signals f₂ and f₃ are inputted to the mixer 28a, the reference pilot signal f₄ which is the same as the reference pilot signal f₄ which has been recorded on the proceeding fourth track is inputted to the mixer 28a, and when the video track of the first track is traced, that is, during a period that the produced reference pilot signals f₄, f₁ and f₂ are inputted to the mixer 28a, the reference pilot signal f₁ for the first track is applied to the mixer 28a. Furthermore, when the reproduced reference pilot signals f₁ and f₂ which are reproduced from the PCM track by tracing the third track are inputted to the mixer 28a, the reference pilot signals f₂ for proceeding second track is applied to the mixer 28a, and when reproduced reference pilot signals f₃, f₂ and f₄ that are reproduced from the video track of the third track are applied to the mixer 28a, the mixer 28a further receives the reference pilot signal f₃ for the third track.

In a similar manner, the reference pilot signal produced by the programmable counter 14b is further inputted to the mixer 28b. More specifically, when the PCM track of the second track is traced, that is, during a period that the reproduced reference pilot signals f₃, f₂ and f₁ are inputted to the mixer 28b, the reference pilot signal f₁ which is the same as the reference pilot signal f₁ which has been recorded on the proceeding first track, and when the video track of the second track is traced, that is, during a period that the produced reference pilot signals f₁, f₂ and f₃ are inputted to the mixer 28a, the reference pilot signal f₂ for the second track is applied to the mixer 28b. Furthermore, when the reproduced reference pilot signals f₂, f₁ and f₃ which are reproduced from the PCM track by tracing the fourth track are inputted to the mixer 28b, the reference pilot signals f₃ for proceeding third track is applied to the mixer 28b, and when reproduced reference pilot signals f₄, f₃ and f₁ that are reproduced from the video track of the fourth track are applied to the mixer 28b, the mixer 28b further receives the reference pilot signal f₄ for the fourth track.

Therefore, if the PCM track of the first track is traced by the first magnetic head 12a, two frequency difference signals (f₃ - f₄: 16 kHz) and (f₄ - f₂: 29 kHz) are outputted from the mixer 28a, and then, one frequency difference signal (f₃ - f₄: 16 kHz) is derived by an f_{H} bandpass filter 30a. Furthermore, if the video track of the first track is traced by the first magnetic head 12a, two frequency difference signals (f₂ - f₁: 16 kHz) and (f₄ - f₁: 49 kHz) are outputted from the mixer 28a, and then, respective frequency difference signals are derived by the f_{H} bandpass filter 30a and a 3f_{H} bandpass filter 32a. If the PCM track of the second track is traced by the second magnetic head 12b, two frequency difference signals (f₂ - f₁: 16 kHz) and (f₃ - f₁: 63 kHz) are outputted from the mixer 28b, and then, one frequency difference signal (f₂ - f₁: 16 kHz) is derived by an f_{H} bandpass filter 30b. In addition, if the video track of the second track is traced by the second magnetic head 12b, two frequency difference signals (f₂ - f₁: 16 kHz) and (f₃ - f₂: 46 kHz) are outputted from the mixer 28b, and then, respective frequency difference signals are derived by the f_{H} bandpass filter 30b and a 3f_{H} bandpass filter 32b.

When the first track is traced, levels of the frequency difference signals (f₃ - f₄: 16 kHz) and (f₂ - f₁: 16 kHz) which are obtained from the f_{H} bandpass filter 30 are detected by an amplitude detector 34a, and the frequency difference signal (f₄ - f₁: 46 kHz) obtained from the 3f_{H} bandpass filter 32a is detected by an amplitude detector 34b. Furthermore, when the second track is traced, a level of the frequency difference signal (f₂ - f₁: 16 kHz) obtained from the f_{H} bandpass filter 30b and a level of the frequency difference signal (f₃ - f₂: 46 kHz) obtained from the 3f_{H} bandpass filter 32b are respectively detected by amplitude detectors 34c and 34d. Then, outputs of the amplitude detectors 34a and 34b are inputted to an operational amplifier 36a so as to be subtracted from each other. Furthermore, outputs of the amplitude detectors 34c and 34d are inputted to an operational amplifier 36b so as to be subtracted from each other. Therefore, during a period of the PCM track of the first track, a negative level of the frequency difference signal (f₃ - f₄: 16 kHz) is outputted from the operational amplifier 36a, and during a period of the PCM track of the second track, a positive level of the frequency difference signal (f₂ - f₁: 16 kHz) is outputted from the operational amplifier 36b.

During a period of the video track of the first track, a level signal which is obtained by subtracting a level of the frequency difference signal (f₂ - f₁: 16 kHz) from a level of the frequency difference signal (f₄ - f₁ : 46 kHz) is outputted from the operational amplifier 36a, and a level signal obtained by subtracting a level of the frequency difference signal (f₃ - f₂: 46 kHz) from a level of the frequency difference signal (f₂ - f₁: 16 kHz) is outputted from the operational amplifier 36b. The level signals are applied to a switch circuit through amplifiers 38a and 38b, respectively, and then, an output of a period of the PCM track is outputted from the switch circuit 40 as an index signal, and an output of a period of the video track is outputted as an ATF error signal. A rotation speed and a phase of a capstan motor (not shown) is controlled in accordance with the ATF error signal. Furthermore, as shown in Figure 3(D), the index signal becomes the low level because the level signal is a negative signal during the first track, and the high level because the level signal is a positive signal during the second track. Therefore, it is possible to determine that the index is added in the second track, in this embodiment shown.

In addition, by combining the index signals thus reproduced in a direction of a time axis, it is possible to record a complex code such as a time code.

Furthermore, since the pilot signals are recorded on the magnetic tape 20 at timings of Figure 3(B) and 3(C), the switch circuit 40 is switched by a head switching signal (RFSW) as shown in Figure 3(A). That is, if the head switching signal RFSW shown in Figure 3(A) is the high level, the switch 40a is connected to a contact C2, and the switch 40b is connected to a contact C3. When the low level, the switches 40a and 40b are connected to contacts C1 and C4, respectively. Therefore, during a period of the high level of the switching signal RFSW, the video track of the second track or the fourth track is traced by the second magnetic head 12b, and therefore, the ATF error signal is outputted through the contact C3. At the same time, since the PCM track of the first track or the third track is traced by the first magnetic head 12a, the index signal is outputted through the contact C2. On the other hand, during a period of the low level of the head switching signal, the video track of the first track or the third track is traced by the first magnetic head 12a, and therefore, the ATF error signal is outputted through the contact C1, and the PCM track of the second track or the fourth track is traced by the second magnetic head 12b, and therefore, the index signal is outputted through the contact C4.

## Claims

1. A video tape recorder of a 4-frequency pilot system wherein each of first, second, third and fourth tracks includes a first area (A) and a second area (B), and first, second, third and fourth pilot signals (f1 to f4) are inherently recorded on first areas of first, second, third and fourth tracks, whilst pilot signals are recorded on the second areas in dependence of an index signal
the video tape recorder comprising
pilot signal producing means (14a, 14b) for producing said first, second, third and fourth pilot signals;
first recording means, including a first magnetic head (12a), for recording any one of said first and third pilot signals (f1, f3) on said second area of each of said first and third tracks;
second recording means, including a second magnetic head (12b), for recording any one of said second and fourth pilot signals (f2, f4) on said second area of each of said second and fourth tracks;
the selection between the first and third pilot signal and between the second and fourth pilot signal being in response to the index signal
index detecting means (28a-38a, 28b-38b) for detecting the index for each track on the basis of one of the pilot signals produced by said pilot signal producing means and at least of one signal reproduced from said second area by said one of said first magnetic head and said second magnetic head at a time that said second area (B) of each track is traced by one of said first magnetic head and said second magnetic head;
wherein said first track and said third track can be traced by said first magnetic head, and said second track and said fourth track can be traced by said second magnetic head, and
said index detecting means includes
first frequency difference signal producing means (28a) for receiving one of the reference pilot signal being produced by said pilot signal producing means and different from said first and third pilot signals, and signals reproduced from said second area (B) of one of said first and third tracks by said first magnetic head, and for producing first two frequency difference signals on the basis of signals received by said first frequency difference signal producing means;
second frequency difference signal producing means (28b) for receiving one of the reference pilot signals produced by said pilot signal producing means and different from said second and fourth pilot signals, and signals reproduced from said second area of one of said second and fourth tracks by said second magnetic head, and for producing second two frequency difference signals on the basis of signals received by said second frequency difference signal producing means;
first level difference detecting means (36a) for outputting a first level difference signal on the basis of said first two frequency difference signals; and
second level difference detecting means (36b) for outputting a second level difference signal on the basis of said second two frequency difference signals; and
the outputs of the first and second level difference detecting means during the period of the second area forming the index signal.

2. A video tape recorder according to claim 1, wherein each of said first level difference detecting means includes first bandpass filter means (30a; 30b) for filtering the frequency difference signals with a first predetermined frequency pass-band; second bandpass filter means (32a; 32b) for filtering the frequency difference signals with a second predetermined frequency pass-band; first amplitude detecting means (34a; 34c) for detecting and amplitude of an output of said first bandpass filter means; second amplitude detecting means (34b; 34d) for detecting an amplitude of an output of said second bandpass filter means; and difference evaluating means (36a) for evaluating a difference between amplitudes detected by said first amplitude detecting means and said second amplitude detecting means, an output signal of said difference evaluating means being said first level difference signal or said second level difference signal.

3. A video tape recorder according to claim 1, further comprising ATF error detecting means for detecting an ATF error for each track on the basis one of the pilot signals produced by said pilot signal producing means and at least one signal reproduced from said first area by said one of said first magnetic head and said second magnetic head at a time (RFSW) that said first area of each track is traced by one of said first magnetic head and said second magnetic head.

4. A video tape recorder according to claim 1, further comprising ATF error detecting means for detecting an ATF error for each track on the basis one of the pilot signals produced by said pilot signal producing means and at least one signal reproduced from said first area by said one of said first magnetic head and said second magnetic head at a time that said first area of each track is traced by one of said first magnetic head and said second magnetic head.

5. A video tape recorder according to claim 4, wherein signals outputted by said first level difference signal producing means and said second level difference signal producing means become to be ATF error signals at a timing when said first area of said each track is traced by said first magnetic head or said second magnetic head.

## Patentansprüche

1. Videoband-Aufzeichnungsgerät eines 4-Frequenz-Pilotsystems, bei dem jeweils eine erste, eine zweite, eine dritte und eine vierte Spur einen ersten Bereich (A) und einen zweiten Bereich (B) enthält, und ein erstes, ein zweites, ein drittes und ein viertes Pilotsignal (f1 bis f4) inhärent auf ersten Bereichen einer ersten, einer zweiten, einer dritten und einer vierten Spur aufgezeichnet werden, während Pilotsignale auf den zweiten Bereichen in Abhängigkeit von einem Indexsignal aufgezeichnet werden, wobei das Videoband-Aufzeichnungsgerät aufweist:
ein Pilotsignal-Erzeugungsmittel (14a, 14b) zum Erzeugen des ersten, des zweiten, des dritten und des vierten Pilotsignals;
ein erstes Aufzeichnungsmittel, das einen ersten Magnetkopf (12a) enthält, zum Aufzeichnen des ersten oder des dritten Pilotsignals (f1, f3) auf dem zweiten Bereich von jeweils der ersten und der dritten Spur;
ein zweites Aufzeichnungsmittel, das einen zweiten Magnetkopf (12b) enthält, zum Aufzeichnen des zweiten oder des vierten Pilotsignals (f2, f4) auf dem zweiten Bereich von jeweils der zweiten und der vierten Spur;
wobei die Auswahl zwischen dem ersten und dem dritten Pilotsignal und zwischen dem zweiten und dem vierten Pilotsignal als Reaktion auf das Indexsignal stattfindet;
ein Index-Erfassungsmittel (28a bis 38a, 28b bis 38b) zum Erfassen des Index für jede Spur auf der Grundlage des durch das Pilotsignal-Erzeugungsmittel erzeugten Pilotsignals oder mindestens eines Signals, das von dem zweiten Bereich durch den ersten Magnetkopf oder den zweiten Magnetkopf zu einem Zeitpunkt wiedergegeben wird, zu dem dem zweiten Bereich (B) jeder Spur durch den ersten Magnetkopf oder den zweiten Magnetkopf gefolgt wird;
wobei der ersten Spur und der dritten Spur durch den ersten Magnetkopf gefolgt werden kann und der zweiten und der vierten Spur durch den zweiten Magnetkopf gefolgt werden kann; und
wobei das Index-Erfassungsmittel enthält:
ein erstes Frequenzdifferenzsignal-Erzeugungsmittel (28a) zum Empfangen des durch das Pilotsignal-Erzeugungsmittel erzeugten Referenz-Pilotsignals, das sich von dem ersten und dem dritten Pilotsignal unterscheidet, oder von Signalen, die von dem zweiten Bereich (B) der ersten oder der zweiten Spur durch den ersten Magnetkopf wiedergegeben werden, und zum Erzeugen zweier erster Frequenzdifferenzsignale auf der Grundlage von Signalen, die durch das erste Frequenzdifferenzsignal-Erzeugungsmittel empfangen werden;
ein zweites Frequenzdifferenzsignal-Erzeugungsmittel (28b) zum Empfangen des durch das Pilotsignal-Erzeugungsmittel erzeugten Referenz-Pilotsignals, das sich von dem zweiten und dem vierten Pilotsignal unterscheidet, oder von Signalen, die von dem zweiten Bereich (B) der zweiten oder der vierten Spur durch den zweiten Magnetkopf wiedergegeben werden, und zum Erzeugen zweier zweiter Frequenzdifferenzsignale auf der Grundlage von Signalen, die durch das zweite Frequenzdifferenzsignal-Erzeugungsmittel empfangen werden;
ein erstes Pegeldifferenz-Erfassungsmittel (36a) zum Ausgeben eines ersten Pegeldifferenzsignals auf der Grundlage der ersten beiden Frequenzdifferenzsignale;
ein zweites Pegeldifferenz-Erfassungsmittel (36b) zum Ausgeben eines zweiten Pegeldifferenzsignals auf der Grundlage der zweiten beiden Frequenzdifferenzsignale; und
wobei die Ausgaben des ersten und des zweiten Pegeldifferenz-Erfassunsgmittels während der Periode des zweiten Bereichs das Indexsignal bilden.

2. Videoband-Aufzeichnungsgerät nach Anspruch 1, dadurch gekennzeichnet, daß jedes der ersten Pegeldifferenz-Erfassungsmittel enthält: ein erstes Bandpass-Filtermittel (30a; 30b) zum Filtern der Frequenzdifferenzsignale mit einem ersten vorbestimmten Frequenz-Durchlaßbereich; ein zweites Bandpass-Filtermittel (32a; 32b) zum Filtern der Frequenzdifferenzsignale mit einem zweiten vorbestimmten Frequenz-Durchlaßbereich; ein erstes Amplituden-Erfassungsmittel (34a, 34c) zum Erfassen einer Amplitude einer Ausgabe des ersten Bandpass-Filtermittels; ein zweites Amplituden-Erfassungsmittel (34b, 34d) zum Erfassen einer Amplitude einer Ausgabe des zweiten Bandpass-Filtermittels; und ein Differenz-Bewertungsmittel (36a) zum Bewerten einer Differenz zwischen Amplituden, die durch das erste Amplituden-Erfassungsmittel und das zweite Amplituden-Erfassunsgmittel erfaßt werden, wobei ein Ausgangssignal des Differenz-Bewertungsmittels das erste Pegel-Differenzsignal oder das zweite Pegel-Differenzsignal ist.

3. Videoband-Aufzeichnungsgerät nach Anspruch 1, welches außerdem ein ATF-(automatische Spurfolge)-Fehlererfassungsmittel aufweist zum Erfassen eines ATF-Fehlers für jede Spur auf der Grundlage von Pilotsignalen, die durch das Pilotsignal-Erzeugungsmittel erzeugt werden, oder von mindestens einem Signal, das von dem ersten Bereich durch den ersten oder den zweiten Magnetkopf wiedergegeben wird, zu einem Zeitpunkt (RFSW), zu dem der erste Bereich jeder Spur von dem ersten Magnetkopf oder dem zweiten Magnetkopf gefolgt wird.

4. Videoband-Aufzeichnungsgerät nach Anspruch 1, welches außerdem ein ATF-(automatische Spurfolge)-Fehlererfassungsmittel aufweist zum Erfassen eines ATF-Fehlers für jede Spur auf der Grundlage von Pilotsignalen, die durch das Pilotsignal-Erzeugungsmittel erzeugt werden, oder von mindestens einem Signal, das von dem ersten Bereich durch den ersten oder den zweiten Magnetkopf wiedergegeben wird, zu einem Zeitpunkt, zu dem der erste Bereich jeder Spur von dem ersten Magnetkopf oder dem zweiten Magnetkopf gefolgt wird.

5. Videoband-Aufzeichnungsgerät nach Anspruch 4, bei welchem Signale, die durch das erste Pegeldifferenzsignal-Erzeugungsmittel und das zweite Pegeldifferenzsignal-Erzeugungsmittel ausgegeben werden, zu ATF-Fehlersignalen werden zu einem Zeitpunkt, zu dem der erste Bereich jeder Spur von dem ersten Magnetkopf oder dem zweiten Magnetkopf gefolgt wird.

## Revendications

1. Magnétoscope à ruban d'un système pilote à quatre fréquences, dans lequel chacune d'une première, seconde, troisième et quatrième pistes magnétiques comporte une première région (A) et une seconde région (B), et des premier, second, troisième et quatrième signaux pilotes (f1 à f4) sont enregistrés de manière inhérente sur des premières régions d'une première, seconde, troisième et quatrième pistes magnétiques, lorsque des signaux pilotes sont enregistrés sur les secondes régions en fonction d'un signal index, ledit magnétoscope à ruban comprenant:
un moyen producteur de signal pilote (14a, 14b) pour produire lesdits premier, second, troisième et quatrième signaux pilotes;
un premier moyen d'enregistrement comportant une première tête magnétique (12a) pour enregistrer n'importe quel desdits premier et troisième signaux pilotes (f1, f3) sur ladite seconde région de chacune desdites première et troisième pistes magnétiques;
un second moyen d'enregistrement comportant une seconde tête magnétique (12b) pour enregistrer n'importe quel desdits second et quatrième signaux pilotes (f2, f4) sur ladite seconde région de chacune desdites seconde et quatrième pistes magnétiques;
la sélection entre le premier et le troisième signal pilote et le second et le quatrième signal pilote se produisant en fonction dudit signal index;
un moyen détecteur d'index (28a à 38a, 28b à 38b) pour détecter l'index pour chaque piste magnétique à partir soit du signal pilote produit par ledit moyen producteur de signal pilote, soit d'au moins un signal reproduit de ladite seconde région par ladite première tête magnétique ou ladite seconde tête magnétique à un instant où ladite seconde région (B) de chaque piste magnétique est suivie par ladite première tête magnétique ou ladite seconde tête magnétique;
ladite première piste magnétique et ladite troisième piste magnétique étant susceptibles d'être suivies par ladite première tête magnétique et ladite seconde piste magnétique et ladite quatrième piste magnétique étant susceptibles d'être suivies par ladite seconde tête magnétique; et
ledit moyen détecteur d'index comportant:
un premier moyen producteur de signal de différence de fréquence (28a) pour recevoir soit ledit signal pilote de référence produit par ledit moyen producteur de signal pilote et différent desdits premier et troisième signaux pilotes, soit des signaux reproduits de ladite seconde région (B) desdites première ou troisième pistes magnétiques par ladite première tête magnétique, et pour produire une première paire de signaux de différence de fréquence à partir de signaux reçus par ledit premier moyen producteur de signal de différence de fréquence;
un second moyen producteur de signal de différence de fréquence (28b) pour recevoir soit ledit signal pilote de référence produit par ledit moyen producteur de signal pilote et différent desdits second et quatrième signaux pilotes, soit des signaux reproduits de ladite seconde région (B) desdites seconde ou quatrième pistes magnétiques par ladite seconde tête magnétique, et pour produire une seconde paire de signaux de différence de fréquence à partir de signaux reçus par ledit second moyen producteur de signal de différence de fréquence;
un premier moyen détecteur de différence de niveau (36a) pour fournir en sortie un premier signal de différence de niveau à partir de ladite première paire de signaux de différence de fréquence; et
un second moyen détecteur de différence de niveau (36b) pour fournir en sortie un second signal de différence de niveau à partir de ladite seconde paire de signaux de différence de fréquence; et
les sorties desdits premier et second moyens détecteurs de différence de niveau lors de la période de ladite seconde région formant ledit signal index.

2. Magnétoscope à ruban selon la revendication 1, dans lequel chacun desdits premiers moyens détecteurs de différence de niveau comporte des premiers moyens de filtre passe-bande (30a; 30b) pour filtrer lesdits signaux de différence de fréquence avec une première bande passante prédéterminée de fréquence; des seconds moyens de filtre passe-bande (32a; 32b) pour filtrer lesdits signaux de différence de fréquence avec une seconde bande passante prédéterminée de fréquence; un premier moyen détecteur d'amplitude (34a, 34c) pour détecter une amplitude d'une sortie dudit premier moyen de filtre passe-bande; un second moyen détecteur d'amplitude (34b, 34d) pour détecter une amplitude d'une sortie dudit second moyen de filtre passebande; et un moyen d'évaluation de différence de fréquence (36a) pour évaluer une différence entre des amplitudes détectées par ledit premier moyen détecteur d'amplitude et ledit second moyen détecteur d'amplitude, un signal de sortie dudit moyen d'évaluation de différence étant ledit premier signal de différence de niveau ou ledit second signal de différence de niveau.

3. Magnétoscope à ruban selon la revendication 1, comprenant en outre un moyen détecteur d'erreur ATF (suivi automatique de piste) pour chaque piste magnétique soit à partir de signaux pilotes produits par ledit moyen producteur de signal pilote, soit à partir d'au moins un signal reproduit de ladite première région par ladite première tête magnétique ou ladite seconde tête magnétique à un instant (RFSW) où ladite première région de chaque piste magnétique est suivie par ladite première tête magnétique ou ladite seconde tête magnétique.

4. Magnétoscope à ruban selon la revendication 1, comprenant en outre un moyen détecteur d'erreur ATF (suivi automatique de piste) pour chaque piste magnétique soit à partir de signaux pilotes produits par ledit moyen producteur de signal pilote, soit à partir d'au moins un signal reproduit de ladite première région par ladite première tête magnétique ou ladite seconde tête magnétique à un instant (RFSW) où ladite première région de chaque piste magnétique est suivie par ladite première tête magnétique ou ladite seconde tête magnétique.

5. Magnétoscope à ruban selon la revendication 4, dans lequel des signaux produits en sortie par ledit premier moyen producteur de signal de différence de niveau et ledit second moyen producteur de signal de différence de niveau deviennent des signaux d'erreur ATF à un instant où ladite première région de chacune desdites pistes magnétiques est suivie par ladite première tête magnétique ou ladite seconde tête magnétique.
